# EUROPÄISCHE PATENTSCHRIFT

(11) **EP 1 353 775 B1**
(45) Veröffentlichungstag und Bekanntmachung des Hinweises auf die Patenterteilung: **20.04.2005**
(21) Anmeldenummer: 01980257.8
(22) Anmeldetag: 22.08.2001
(51) Int. Cl.: B23K 35/02, B32B 15/01

(54) **FOLIENVERBUNDKÖRPER**
COMPOSITE FILM BODY
CORPS COMPOSITE EN FORME DE FILM

(30) Priorität: 04.09.2000 DE 10043484
(43) Veröffentlichungstag der Anmeldung: 22.10.2003
(73) Patentinhaber: Vacuumschmelze GmbH, 63450 Hanau (DE)
(72) Erfinder: HILZINGER, Rainer, 63505 Langenselbold (DE); NÜTZEL, Dieter, 63512 Hainburg (DE); HARTMANN, Thomas, 63674 Altenstadt (DE)
(74) Vertreter: Schmuckermaier, Bernhard
(86) Internationale Anmeldenummer: PCT/EP2001/009684
(87) Internationale Veröffentlichungsnummer: WO 2002/020210

(56) Entgegenhaltungen:
- EP-A- 0 038 584
- EP-A- 0 337 102
- EP-A- 0 342 545
- WO-A-88/07932
- DE-A- 19 806 380

## Beschreibung

Die vorliegende Erfindung stellt einen völlig neuen Folienverbundkörper dar, bestehend aus einer Vielzahl von dünnen Legierungsbändern, die in mehreren Lagen versetzt zueinander bezüglich ihrer Breitseite angeordnet sind und über die Breit- und Dickenseite miteinander verbunden sind, wobei die dünnen Legierungsbänder vorzugsweise aus einer amorphen, mikro- oder nanokristallinen Legierung bestehen.

Amorphe, mikro- und nanokristalline Legierungen sind seit langer Zeit bekannt. Beide Arten von Legierungen werden über das sogenannte Schmelzspinnverfahren hergestellt. Dabei wird eine Schmelze durch eine enge Düse, die zumeist aus einem keramischen Material besteht auf ein sehr schnell rotierendes Kühlrad gespritzt und dabei zu einem Legierungsband erstarrt. Die Erstarrung erfolgt dabei so rasch, dass das Legierungsband keine kristalline Struktur sondern eine amorphe Struktur aufweist. Die Grundzüge dieser Rascherstarrungstechnik sind beispielsweise in der US 3,732,349 dargestellt.

Mikrokristalline Legierungen sind Legierungen, die sich durch ein sehr feinkörniges Gefüge, d.h. Korngrößen im µm-Bereich auszeichnen oder feine µm-große, kristalline Ausscheidungen eingebettet in einer amorphen Matrix aufweisen.

Zu einer nanokristallinen Legierung, d. h. zu einer Legierung bestehend aus einer amorphen Matrix, in der kristalline Auscheidungen mit Korngrößen kleiner 100 nm fein verteilt vorliegen, gelangt man durch eine anschließende wohldefinierte Wärmebehandlung des Legierungsbandes.Die Grundzüge dieser nanokristallinen Legierungen sind beispielsweise in der EP 0 271 657 beschrieben.

Mit den heute bekannten Schmelzspinnverfahren, die u. a. in der US 5,908,068 detailliert dargestellt sind, können jedoch nur Legierungsbänder gegossen werden, deren Breite höchstens bei ca. 200 mm liegt. Der Herstellung von breiteren Legierungsbändern, das heißt also von Legierungsbändern, die Breiten größer oder wesentlich größer 200 mm aufweisen, sind enorme technische Grenzen gesetzt.

Eine einfache Verbreiterung des in der Regel rechteckförmigen engen Düsenschlitzes der Gießdüse, die typischerweise aus einem Keramikwerkstoff besteht, sind verfahrensbedingt enge Grenzen gesetzt. Da sich der Düsenschlitz mit zunehmender Breite durch thermische Spannungen und dem in der Düse herrschenden Schmelzdruck geometrisch verändert, wird die geometrische Gleichmäßigkeit des zu gießenden Legierungsbandes sehr stark beeinträchtigt, d.h. es kommt zu starken nicht hinnehmbaren Schwankungen in der Dicke des gegossenen Legierungsbandes. Bei den im industriellen Maßstab gefertigten 25 mm breiten Standardlegierungsbändern beträgt die Abweichung von der Solldicke etwa 5% bis 10%. Die Abweichungen von der Solldicke bei breiteren Legierungsbändern sind unvergleichlich höher, was bei verschiedenen Anwendungen, insbesondere bei Lötfolien nicht tolerierbar ist.

Darüber hinaus ist eine simple Verbreiterung des Düsenschlitzes nicht ohne weiteres möglich, da dadurch die mechanische Stabilität der Düse beeinträchtigt wird.

Um das Problem der Verformung des Düsenschlitzes und damit die Geometriestabilität der Legierungsbänder zu lösen, sind aus dem Stand der Technik verschiedene Maßnahmen an den Düsenschlitzen für das Schmelzspinnverfahren bekannt.

Aus der EP 0 294 517 ist beispielsweise eine für das Gießen von breiten Legierungsbändern angepaßte Düsengeometrie bekannt, die einen diskontinuierlichen Düsenschlitz aufweist. Dieser Düsenschlitz besteht aus parallelogrammförmigen Einzelschlitzen, die in einem bestimmten Winkel zur Bewegungsrichtung des Kühlrades angeordnet sind, um die Dickenstabilität der breiten Legierungsbänder zu verbessern.

Ferner ist aus der JP 58132357 eine weitere diskontinuierliche Düsenschlitzgeometrie bekannt, mit der die thermische und die druckinduzierte Verformung des Düsenschlitzes beim Gießen von breiten Legierungsbändern reduziert werden soll.

Des Weiteren ist aus der EP 0 768 131 noch eine longitudinal konvex geformte Düsenöffnung bekannt, mit der ebenfalls die Geometriestabilität von breiten Legierungsbändern verbessert werden soll.

All diese vorgeschlagenen Variationen an der Düsengeometrie stellen keine befriedigende Möglichkeit dar, amorphe oder mikrokristalline Legierungsbänder mit Breiten von wesentlich mehr als 200 mm zu gießen. Die zunehmende Komplexität des Düsenaufbaus und der Düsenöffnung würden darüber hinaus zu enormen Fertigungskosten und damit zu einem sehr teuren Produkt führen.

Es besteht aber seit langem ein großes Bedürfnis nach sehr breiten Legierungsbändern oder großflächigen Legierungsfolien, die aus amorphen oder mikro- bzw. nanokristallinen Legierungen bestehen.

Zusätzlich besteht auch der Wunsch nach amorphen, nanokristallinen und/oder mikrokristallinen Legierungsbändern, die eine Dicke von mehr als 30 µm, vorzugsweise mehr als 50µm aufweisen. Insbesondere werden oft relativ dicke Lötfolien beim Löten von großen Bauteilen (z.B. Wärmetauschern) benötigt.

Insbesondere auf dem Anwendungsfeld der amorphen Lötfolien besteht schon lange der Wunsch nach wesentlich breiteren Lötfolien. So besteht bei der Herstellung von Wärmetauschern eine große ungestillte Nachfrage nach amorphen oder nanokristallinen Lötfolien, die möglichst Breiten von bis zu 500 mm aufweisen sollen.

Erfindungsgemäß wird das Bedürfnis nach einer sehr breiten Legierungsfolie aus einer vorzugsweise amorphen, mikro- oder nanokristallinen Legierung durch den eingangs genannten Folienverbundkörper gestillt, der aus einer Vielzahl von dünnen Legierungsbänder besteht, welche in mehreren Lagen versetzt zueinander bezüglich ihren Breitseite angeordnet sind und über die Breit- und Dichenseite miteinander verbunden sind. Es wird angemerkt, daß bei der Erfindung mikro- und nanokristalline sowie amorphe Legierungen im Vordergrund stehen, die Erfindung sich jedoch auch auf konventionelle kristalline Legierungen erstreckt.

Mit einem solchen Folienverbundkörper ist die Realisierung eines sehr breiten "Legierungsbandes" mit amorpher, mikrooder nanokristalliner Struktur mit einfachen Mitteln möglich. Insbesondere können "Legierungsbänder" hergestellt werden, die wesentlich breiter als 200 mm sind und deutlich höhere Dicken aufweisen.

Die einzelnen Legierungsbänder werden dabei so zusammengefügt, dass der aus einzelnen Legierungsbändern aufgebaute Folienverbundkörper eine ausreichende Geometriestabilität, insbesondere Dickenstabilität, aufweist. Mit einem Folienverbundkörper nach der vorliegenden Erfindung lassen sich ohne weiteres Breiten bis zu 500 mm realisieren.

Typischerweise besteht der Folienverbundkörper aus mindestens zwei Lagen von dünnen Legierungsbändern, wobei die einzelnen Lagen typischerweise zueinander versetzt zusammengefügt sind.

Der Folienverbundkörper weist dabei eine Dicke von ca. 25 µm bis ca. 200 µm auf, vorzugsweise eine Dicke von 50 µm bis 100 µm.

In einer ersten alternativen Ausgestaltung der vorliegenden Erfindung ist die Vielzahl von Legierungsbändern über eine oder mehrere Schweißnähte miteinander verbunden.

In einer zweiten alternativen Ausführungsform der vorliegenden Erfindung sind die Legierungsbänder miteinander über eine oder mehrere Einzelschweißungen verbunden, wobei die Einzelschweißungen typischerweise voneinander zwischen 5 mm und 50 mm beabstandet sind. Als besonders geeignet haben sich Abstände zwischen 10 mm und 30 mm gezeigt.

Wesentlich ist bei der Erfindung, dass der Folienverbundkörper aus einer Vielzahl von dünnen Legierungsbändern besteht, die in mehreren Lagen versetzt zueinander bezüglich ihrer Breitseite angeordnet sind und über die Breit- und Dickenseite miteinander verbunden sind. Im Gegensatz zu einem aus dem Stand der Technik bekannten "Sandwichverbund", wie er beispielsweise in der WO 88/07932 oder der EP 0 357 464 beschrieben ist, bei dem mehrere Legierungsbänder direkt übereinander zusammengefügt werden, werden nach der vorliegenden Erfindung die Legierungsbänder bezüglich ihrer Breite zueinander versetzt zusammengefügt.

Die EP-A-0 337 102 zeigt einen Folienverbundkörper, bei dem auf einen aus mehreren nebeneinander angeordneten Folien geformten Kern eine weitere Folie helikal aufgewickelt wird.

In einer Ausführungsform der vorliegenden Erfindung werden die Legierungsbänder miteinander über Schweißverbindungen zusammengefügt, wobei neben Punktschweißen auch Laserschweißen oder Rollnahtschweißen in Betracht kommen, wobei auf die Schweißleistung genau geachtet werden muß, um die an den Schweißstellen auftretenden Versprödungen möglichst gering zu halten und insbesondere ein "Perforieren" der dünnen Legierungsbänder zu vermeiden.

Es sind jedoch auch andere Formen des Zusammenfügens denkbar, die nur lokal eine Erwärmung und damit Versprödung der zu fügenden einzelnen Legierungsbänder verursacht. Des Weiteren sind auch Verbindungen denkbar, welche bei geringer Temperaturbeaufschlagung ablaufen, so z. B. kleben oder weichlöten.

Die Erfindung ist im folgenden mittels Ausführungsbeispielen anhand der Zeichnung eingehend beschrieben. Dabei zeigen:
- Figur 1: eine schematische perspektivische Ansicht eines Folienverbundkörpers nach der vorliegenden Erfindung und
- Figur 2: eine schematische perspektivische Darstellung einer möglichen automatisierten Herstellung eines Folienverbundkörpers aus der Figur 1.

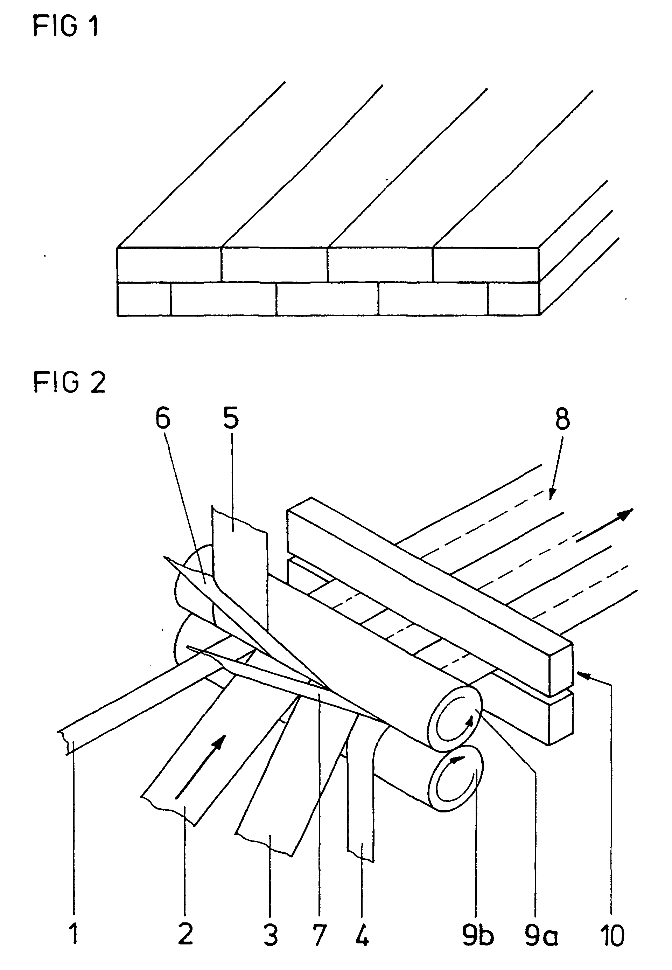

Wie in der Figur 1 dargestellt, besteht der erfindungsgemäße Folienverbundkörper aus einer Vielzahl von dünnen Legierungsbändern, die in mehreren Lagen versetzt zueinander bezüglich ihrer Breitseite angeordnet sind und über die Breit- und Dickenseite mitteinander verbunden sind.

Der in der Figur 1 gezeigte Folienverbundkörper weist zwei Lagen Legierungsbänder auf, die jeweils eine Breite von ungefähr 25 mm aufweisen. Die beiden äußeren Legierungsbänder in der unteren Lage weisen jeweils die halbe Breite auf, d.h. eine Breite von 12,5 mm. Die gezeigten einzelnen Legierungsbänder sind in der Breite versetzt zueinander angeordnet.

Die Dicke der dort gezeigten einzelnen Legierungsbänder weisen ungefähr 25 µm auf, so dass die Dicke des Folienverbundkörpers ungefähr 50 µm aufweist.

Diese Anordnung hat insbesondere den Vorteil, dass Dickenschwankungen der einzelnen Legierungsbänder zwischen der Dikke des Folienverbundkörpers und den beiden Randbereichen des Folienverbundkörpers ausgeglichen werden.

Die einzelnen Legierungsbändern weisen über das Schmelzspinnverfahren fertigungsbedingt Dickenschwankungen zwischen der Mitte und den Ränder auf. Diese nicht gewollten Schwankungen werden durch den gezeigten zweilagigen Verbund geschickt ausgeglichen, so daß der Folienverbundkörper eine höhere relative Dickenhomogenität aufweist als ein einzelnes Legierungsband.

Der in der Figur 1 gezeigte Folienverbundkörper wurde mittels Punktschweißen zusammengefügt. Die im Folienverbundkörper vorliegenden Einzelschweißungen (nicht gezeigt) waren voneinander ungefähr 20 mm beabstandet. Eine Erhöhung der Abstände der Einzelschweißungen über 50 mm hinaus steht einer ausreichenden Stabilität des zusammengefügten Folienverbundkörpers entgegen. Ein engeres Setzen der Einzelschweißungen auf Abstände unterhalb von 5 mm führt andererseits zu einem sehr zeitintensiven und damit kostenintensiven Fertigungsverfahren.

Durch das Schweißen versprödeten die zusammengefügten Legierungsbänder nur lokal. Die weitere mechanische Handhabbarkeit bzw. Stanzbarkeit des Folienverbundkörpers war dadurch nicht beeinträchtigt. Insbesondere ist dies bei der Verwendung der Folienverbundkörper als Lötfolien wichtig.

Die Leistung der Schweißapparatur wurde so gewählt, dass durch den Vorgang keine Löcher in den einzelnen Legierungsbändern und damit im Folienverbundkörper entstehen konnten.

Wie aus der Figur 2 hervorgeht, können die erfindungsgemäßen Folienverbundkörper mit relativ einfachen Mitteln automatisch maschinell hergestellt werden.

Die Figur 2 zeigt sieben etwa 25 µm dicke Legierungsbänder 1, 2, 3, 4, 5, 6 und 7, die zu einem zweilagigen Folienverbundkörper 8 zusammengefügt werden.

Die Legierungsbänder 1, 2, 3 und 4 bilden dabei eine untere Lage, wo hingegen die Legierungsbänder 5, 6 und 7 die obere Lage bilden. Die Legierungsbänder 1, 2, 3, 4, 5, 6 und 7 werden unter Zug durch zwei gegenläufig sich drehende Walzen 9a und 9b zueinander geführt, wobei die die untere Lage des Folienverbundkörpers 8 bildenden einzelnen Legierungsbänder 1, 2, 3 und 4 in der Breite um die Hälfte ihrer eigenen Bandbreite versetzt zu den die obere Lage des Folienverbundkörpers 8 bildenden Legierungsbändern zugeführt werden.

Wie oben schon erwähnt, werden die einzelnen Legierungsbänder einander unter Zug zugeführt, um Welligkeiten der einzelnen Legierungsbänder zu verhindern, die das Zusammenfügen der einzelnen Legierungsbänder zu einem glatten Folienverbundkörper 8 beeinträchtigen würden.

Nachdem die Legierungsbänder so einander zugeführt worden sind und geometrisch den Folienverbundkörper 8 bilden, wird dieser in der schematisch gezeigten Schweißeinrichtung 10 über Rollnahtschweißen zusammengefügt.

Der so entstandene Folienverbundkörper wies eine Breite von ungefähr 300 mm und eine Dicke von ungefähr 50 µm.

## Patentansprüche

1. Folienverbundkörper bestehend aus einer Vielzahl von dünnen Legierungsbändern, die in mehreren Lagen versetzt zueinander bezüglich ihrer Breitseite angeordnet sind und über die Breit - und Dickenseite miteinander verbunden sind.

2. Folienverbundkörper nach Anspruch 1, wobei die dünnen Legierungsbänder aus einer amorphen oder nanokkristallinen Legierung bestehen.

3. Folienverbundkörper nach Anspruch 1, wobei die dünnen Legierungsbänder aus einer mikrokristallinen Legierung bestehen.

4. Folienverbundkörper nach einem der Ansprüche 1 bis 3, wobei die Legierungsbänder eine Dicke von weniger als 50 µm aufweisen.

5. Folienverbundkörper nach einem der Ansprüche 1 bis 4, wobei der Folienverbundkörper eine Breite zwischen ungefähr 150 mm und ungefähr 200 mm aufweist.

6. Folienverbundkörper nach einem der Ansprüche 1 bis 4, wobei der Folienverbundkörper eine Breite von mehr als 200 mm aufweist.

7. Folienverbundkörper nach einem der Ansprüche 1 bis 6, wobei der Folienverbundkörper aus zumindest zwei Lagen von dünnen Legierungsbändern besteht.

8. Folienverbundkörper nach Anspruch 7, wobei der Folienverbundkörper aus zwei Lagen von dünnen Legierungsbändern besteht.

9. Folienverbundkörper nach einem der Ansprüche 1 bis 8, wobei der Folienverbundkörper eine Dicke von 25 µm bis 200 µm aufweist.

10. Folienverbundkörper nach Anspruch 9, wobei der Folienverbundkörper eine Dicke von 50 µm bis 100 µm aufweist.

11. Folienverbundkörper nach einem der Ansprüche 1 bis 10, wobei die Vielzahl von Legierungsbänder über eine oder mehrere Schweißverbindungen miteinander verbunden sind.

12. Folienverbundkörper nach Anspruch 11, wobei die Legierungsbänder miteinander über eine oder mehrere Einzelschweißungen verbunden sind.

13. Folienverbundkörper nach Anspruch 12, wobei die Einzelschweißungen voneinander zwischen 5 mm und 50 mm beabstandet sind.

14. Folienverbundkörper nach Anspruch 12, wobei die Einzelschweißungen voneinander zwischen 10 mm und 30 mm beabstandet sind.

15. Folienverbundkörper nach einem der Ansprüche 1 bis 10, wobei die Vielzahl von Legierungsbändern miteinander über eine oder mehrere Klebeverbindungen verbunden sind.

16. Folienverbundkörper nach einem der Ansprüche 1 bis 10, wobei die Vielzahl von Legierungsbändern über eine oder mehrere Weichlotverbindungen miteinander verbunden sind.

17. Verwendung eines Folienverbundkörpers nach einem der Ansprüche 1 bis 16 als Lötfolie.

## Claims

1. Foil composite body comprising a multiplicity of thin alloy strips which are arranged in a plurality of layers with their wide sides offset with respect to one another and are connected to one another via the wide side and the thickness side.

2. Foil composite body according to Claim 1, in which the thin alloy strips consist of an amorphous or nanocrystalline alloy.

3. Foil composite body according to Claim 1, in which the thin alloy strips consist of a microcrystalline alloy.

4. Foil composite body according to one of Claims 1 to 3, in which the alloy strips have a thickness of less than 50 µm.

5. Foil composite body according to one of Claims 1 to 4, which foil composite body has a width of between approximately 150 mm and approximately 200 mm.

6. Foil composite body according to one of Claims 1 to 4, which foil composite body has a width of more than 200 mm.

7. Foil composite body according to one of Claims 1 to 6, which foil composite body comprises at least two layers of thin alloy strips.

8. Foil composite body according to Claim 7, which foil composite body comprises two layers of thin alloy strips.

9. Foil composite body according to one of Claims 1 to 8, which foil composite body has a thickness of from 25 µm to 200 µm.

10. Foil composite body according to Claim 9, which foil composite body has a thickness of from 50 µm to 100 µm.

11. Foil composite body according to one of Claims 1 to 10, in which the multiplicity of alloy strips are connected to one another via one or more welded joints.

12. Foil composite body according to Claim 11, in which the alloy strips are connected to one another via one or more individual welds.

13. Foil composite body according to Claim 12, in which the individual welds are spaced apart from one another by between 5 mm and 50 mm.

14. Foil composite body according to Claim 12, in which the individual welds are spaced apart from one another by between 10 mm and 30 mm.

15. Foil composite body according to one of Claims 1 to 10, in which the multiplicity of alloy strips are connected to one another by means of one or more adhesive bonds.

16. Foil composite body according to one of Claims 1 to 10, in which the multiplicity of alloy strips are connected to one another by means of one or more soft-solder joins.

17. Use of a foil composite body according to one of Claims 1 to 16 as a soldering foil.

## Revendications

1. Corps composite en forme de film composé d'un grand nombre de bandes fines en alliage, agencées en plusieurs couches décalées en largeur les unes par rapport aux autres, et reliées les unes aux autres par le côté large et épais.

2. Corps composite en forme de film selon la revendication 1,
dans lequel
les bandes fines se composent d'un alliage amorphe ou nanocristallin.

3. Corps composite en forme de film selon la revendication 1,
dans lequel
les bandes fines se composent d'un alliage microcristallin.

4. Corps composite en forme de film selon l'une quelconque des revendications 1 à 3,
dans lequel
les bandes en alliage présentent une épaisseur inférieure à 50 µm.

5. Corps composite en forme de film selon l'une quelconque des revendications 1 à 4,
dans lequel
le corps composite en forme de film présente une largeur comprise entre 150 mm et 200 mm environ.

6. Corps composite en forme de film selon l'une quelconque des revendications 1 à 4,
dans lequel
le corps composite en forme de film présente une largeur supérieure à 200 mm.

7. Corps composite en forme de film selon l'une quelconque des revendications 1 à 6,
dans lequel
le corps composite en forme de film se compose d'au moins deux couches de bandes fines en alliage.

8. Corps composite en forme de film selon la revendication 7,
dans lequel
le corps composite en forme de film se compose de deux couches de bandes fines en alliage.

9. Corps composite en forme de film selon l'une quelconque des revendications 1 à 8,
dans lequel
le corps composite en forme de film présente une épaisseur de 25 µm à 200 µm.

10. Corps composite en forme de film selon la revendication 9,
dans lequel
le corps composite en forme de film présente une épaisseur de 50 µm à 100 µm.

11. Corps composite en forme de film selon l'une quelconque des revendications 1 à 10,
dans lequel
les nombreuses bandes en alliage sont reliées les unes aux autres par un ou plusieurs raccords soudés.

12. Corps composite en forme de film selon la revendication 11,
dans lequel
les bandes en alliage sont reliées les unes aux autres par une ou plusieurs soudures individuelles.

13. Corps composite en forme de film selon la revendication 12,
dans lequel
les soudures individuelles sont distantes les unes des autres de 5 mm à 50 mm.

14. Corps composite en forme de film selon la revendication 12,
dans lequel
les soudures individuelles sont distantes les unes des autres de 10 mm à 30 mm.

15. Corps composite en forme de film selon l'une quelconque des revendications 1 à 10,
dans lequel
les nombreuses bandes en alliage sont reliées les unes aux autres par un ou plusieurs assemblages collés.

16. Corps composite en forme de film selon l'une des revendications 1 à 10,
dans lequel
les nombreuses bandes en alliage sont reliées les unes aux autres par un ou plusieurs assemblages par soudure à l'étain.

17. Utilisation d'un corps composite en forme de film selon l'une quelconque des revendications 1 à 16 en tant que feuille de soudure.
